(19) Europäisches Patentamt
European Patent Office
Office européen des brevets

(11) **EP 4 107 400 B1**

(12) **EUROPÄISCHE PATENTSCHRIFT**

(45) Veröffentlichungstag und Bekanntmachung des Hinweises auf die Patenterteilung:
**27.12.2023   Patentblatt 2023/52**

(21) Anmeldenummer: **21727369.7**

(22) Anmeldetag: **16.04.2021**

(51) Internationale Patentklassifikation (IPC):
***F16B 23/00*** *(2006.01)*

(52) Gemeinsame Patentklassifikation (CPC):
**F16B 23/003**

(86) Internationale Anmeldenummer:
**PCT/EP2021/059983**

(87) Internationale Veröffentlichungsnummer:
**WO 2021/209624 (21.10.2021 Gazette 2021/42)**

(54) **ANTRIEBSELEMENT**

DRIVE ELEMENT

ÉLÉMENT D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2020   DE 102020110450**

(43) Veröffentlichungstag der Anmeldung:
**28.12.2022   Patentblatt 2022/52**

(73) Patentinhaber: **Bongartz, Nicole**
**41464 Neuss (DE)**

(72) Erfinder: **Bongartz, Nicole**
**41464 Neuss (DE)**

(74) Vertreter: **Paul & Albrecht Patentanwälte PartG mbB**
**Stresemannallee 4b**
**41460 Neuss (DE)**

(56) Entgegenhaltungen:
**DE-A1- 2 451 373          US-A1- 2002 184 976
US-A1- 2010 129 176     US-A1- 2016 223 005**

**Beschreibung**

Die vorliegende Erfindung betrifft ein Antriebselement welches - insbesondere an einem Ende eines Schaftes -ein inneres Mitnahmeprofil aufweist, das eine Profilachse definiert und an seiner Innenseite mehrere gleichmäßig um die Profilachse verteilt angeordnete konkave, d. h. nach innen zur Profilachse gekrümmte Antriebsflächen aufweist, zwischen denen ebene oder konvex gekrümmte Übergangsflächen vorgesehen sind, oder ein äußeres Mitnahmeprofil aufweist, das eine Profilachse definiert und an seiner Außenseite mehrere gleichmäßig um die Profilachse verteilt angeordnete konkave, d. h. nach innen zur Profilachse gekrümmte Antriebsflächen aufweist, zwischen denen ebene oder konvex gekrümmte Übergangsflächen vorgesehen sind, wobei

im Querschnitt die Übergangspunkte oder Übergänge zwischen den Antriebsflächen und den Übergangsflächen auf einem gemeinsamen Innenkreis mit dem Innendurchmessers Di liegen, und

die Antriebsflächen auf gleichmäßig um die Profilachse verteilt angeordneten Außenkreisen mit dem Durchmesser $D_a$ liegen und symmetrisch zu ihrer die Profilachse einschließenden Längsmittelebene ausgebildet sind.

Ferner betrifft die Erfindung ein Verfahren zum drehfesten Verbinden zweier Bauteile, insbesondere einer Schraube und eines Drehwerkzeugs, wobei eines der Bauteile als ein Antriebselement mit einem äußeren Mitnahmeprofil und das andere Bauteil als Antriebselement mit einem inneren Mitnahmeprofil ausgebildet ist, bei dem die Mitnahmeprofile der beiden Bauteile axial zusammengesteckt werden, um eine drehfeste Verbindung zwischen den beiden Bauteilen herzustellen.

Schrauben und Drehwerkzeuge sind aus dem Stand der Technik in unterschiedlichen Ausgestaltungen bekannt. Dabei umfassen die Schrauben einen Schraubenschaft mit einem Außengewinde, an dessen oberem Endbereich ein Mitnahmeprofil zur Kopplung mit einem Drehwerkzeug vorgesehen ist, das in der Regel an einem Schraubenkopf ausgebildet ist. Die Drehwerkzeuge sind beispielsweise in Form von Ring- oder Maulschlüsseln ausgebildet oder umfassen auswechselbare Bits, die über einen Bithalters mit einem Antrieb, beispielsweise in Form eines Handgriffs oder eines Akkuschraubers, verbunden werden. Alternativ kann der Bithalter über einen Adapter zum wechselnden Einsatz mit einem Schraubendrehergriff oder einem abgewinkelten Griff, mit einer Knarre, einem Drehmomentschlüssel, einem Akkuschrauber oder einem Ratschenschrauber verbunden werden.

Schraube und Drehwerkzeug werden zum Übertragen eines Drehmoments von dem Drehwerkzeug auf die Schraube mit komplementär zueinander ausgebildeten Mitnahmeprofilen angeboten. Hierzu weist eines der beiden Bauteile an einem seiner freien Enden ein äußeres Mitnahmeprofil mit außenliegenden Antriebsflächen und das andere Bauteil an seinem einen freien Ende ein zu dem äußeren Mitnahmeprofil komplementäres inneres Mitnahmeprofil mit innenliegenden Antriebsflächen auf. Die Mitnahmeprofile sind beispielsweise in der Form eine Innensechskants, eines Außensechskants, eines Torx-Profils sowie eines Kreuzschlitzprofils oder Schlitzprofils ausgebildet. Nach dem Koppeln des inneren Mitnahmeprofils mit dem äußeren Mitnahmeprofil liegen die Mitnahmeprofile mit Spiel aneinander an. Dies führt dazu, dass sich die Mitnahmeprofile in ungewollter Weise voneinander lösen können es weiterhin auch nicht möglich ist, die Mitnahmeprofile axial sauber zueinander auszurichten. Um die Handhabung beim Eindrehen und Lösen der Schraube mit dem Drehwerkzeug zu vereinfachen, werden zwar Drehwerkzeuge, die mit einem Magnet versehen sind, oder ferromagnetische Drehwerkzeuge, die mit einem Magnet magnetisierbar sind, angeboten. Dies ist jedoch mit zusätzlichem Aufwand verbunden. Außerdem kann durch die Verwendung eines magnetischen Drehwerkzeugs eine koaxiale Ausrichtung der Mitnahmeprofile auch nicht erreicht werden. Eine solche koaxiale Ausrichtung ist jedoch erforderlich, um Schraubenverbindungen in automatische Herstellungsprozesse einbinden zu können.

Zur Behebung dieser Problematik ist aus der DE 10 2005 011 734 A1 bekannt, bei einem Drehwerkzeug zum Eindrehen und Lösen sogenannter Torx-Schrauben die Antriebsfläche unter einem spitzen Winkel geneigt zur Profilachse auszubilden, so dass beim axialen Zusammenstecken der Mitnahmeprofile des Drehwerkzeugs und der Schraube ein Klemmsitz entsteht und somit keine zusätzlichen Haltemittel erforderlich sind, um die Schraube in ein Gewinde einzudrehen. In ähnlicher Weise ist aus der WO 2013/062895 A1 und US 2010/0269644 A1 bekannt, die Antriebsflächen von Schraube und Drehwerkzeug geneigt auszubilden, um einen Klemmsitz zwischen den Bauteilen zu erzeugen.

Ein Problem, das beim Eindrehen und Lösen von Schrauben immer wieder auftritt besteht darin, dass die Mitnahmeprofile insbesondere im Bereich der Kanten beschädigt werden, wenn die zum Eindrehen/Lösen der Schraube erforderlichen Drehmomente zu hoch sind.

Zur Lösung dieser Problematik wird in der WO 2019/238250 A1 ein Antriebssystem mit einer Schraube und einem Drehwerkzeug vorgeschlagen, deren Mitnahmeprofile konisch zulaufend ausgebildet sind. Des Weiteren besitzt das äußere Mitnahmeprofil konkave, d.h. nach innen zur Profilachse hin nach innen gekrümmte Antriebsflächen in Kreisbogensegmentform, und das innere Mitnahmeprofil dazu komplementäre Antriebsflächen. Die Anordnung ist dabei so getroffen, dass im Zusammengesteckten Zustand die Antriebsflächen der beiden Bauteile in Umfangsrichtung betrachtet beidseits des Scheitelpunkts der konkaven Krümmung flächig in Kontakt/Eingriff kommen.

Durch diese Ausgestaltung wird neben einer formschlüssigen und drehfesten Verbindung auch eine kraftschlüssige bzw. klemmende Verbindung zwischen Schraube und Drehwerkzeug hergestellt, über welche die Bauteile axial miteinander verbunden und koaxial zueinander ausgerichtet sind. Des Weiteren erfolgt die Kraft- bzw. Drehmomentübertragung ausschließlich über den flächigen Kontakt, der in den beidseits des Scheitelpunktes der kreisbogenförmig gekrümmten Antriebsflächen stattfindet, während ein Kontakt in den zwischen den Antriebsflächen liegenden Übergangsbereichen/Übergangsflächen nicht vorhanden ist. Auf diese Weise können Beschädigungen der Kantenbereiche bzw. Randbereiche der Antriebsflächen vollständig vermieden werden.

Aufgabe der Erfindung ist es, das vorbekannte Antriebssystem weiter zu optimieren und insbesondere eine hohe Drehmomentübertragung sowie eine hohe Lastwechselzahl zu ermöglichen.

Diese Aufgabe ist bei einem Antriebselement der eingangs genannten Art dadurch gelöst, dass der Außendurchmesser $D_a$ sowie der Mittenabstand L zwischen den Mittelpunkten des Innenkreises und der Außenkreise in Abhängigkeit von dem Innendurchmesser $D_i$ so gewählt sind, dass die Normalkraft, die an den Übergangspunkten zwischen jeweils einer Antriebsfläche und der danebenliegenden Übergangsfläche wirkt, wenn in das Mitnahmeprofil ein Drehmoment MD um die Profilachse eingeleitet wird, tangential an der zu der Antriebsfläche jeweils benachbarten Antriebsfläche anliegt oder innerhalb von dieser verläuft, d. h. in den zentralen Bereich des Mitnahmeprofils gerichtet ist, der zwischen der benachbarten Antriebsfläche und der Profilachse liegt.

Entsprechend ist die Aufgabe bei einem Verfahren zum drehfesten Verbinden zweier Bauteile, insbesondere einer Schraube und einem Drehwerkzeugs, der eingangs genannten Art gelöst, dass die Bauteile als erfindungsgemäße Antriebselemente ausgebildet und die Mitnahmeprofile der Antriebselemente derart komplementär zueinander ausgewählt sind, dass die Antriebsflächen der Bauteile beim axialen Zusammenstecken der Mitnahmeprofile flächig in Kontakt miteinander kommen, so dass eine kraftschlüssige und/oder klemmende Verbindung, über welche die Bauteile axial miteinander verbunden werden, zwischen den Bauteilen entsteht.

Es hat sich gezeigt, dass sich optimale Ergebnisse hinsichtlich der erreichbaren Lastwechselzahl und übertragbaren Drehmomente erzielen lassen, wenn die bei einer Drehmomentübertragung an den Antriebsflächen erzeugten Normalkräfte zum Kern des Mitnahmeprofils gerichtet sind und damit die zwischen den konkav gekrümmten Antriebsflächen liegenden Bereiche durch die Normalkräfte nicht oder kaum durch Biege- und/oder Scherkräfte belastet werden. Dies wird durch die erfindungsgemäße Abstimmung zwischen dem Außendurchmesser $D_a$, dem Innendurchmesser $D_i$ und dem Mittenabstand L erreicht. Unter Normalkraft wird dabei derjenige Anteil einer zur Erzeugung des Drehmoments in das Mitnahmeprofil eingeleiteten Hebelkraft verstanden, welcher senkrecht zu der jeweiligen kreissegmentförmigen Antriebsfläche und damit durch deren Kreismittelpunkt verläuft.

Gemäß einer Ausführungsform der Erfindung ist vorgesehen, dass der Mittenabstand L berechnet wird gemäß der Gleichung L = F(L, $D_i$) $D_i$, wobei F(L, $D_i$) = 0,494 e (0,605K) ist. Dabei sollte das Laufverhältnis K = $D_a$/$D_i$ im Bereich von 0,3 und 2,0 liegen.

Gemäß einer Ausgestaltung der Erfindung ist vorgesehen, dass es ein inneres Mitnahmeprofil aufweist und die Antriebsflächen des inneren Mitnahmeprofils gegenüber der Profilachse geneigt sind, wobei sie sich der Profilachse ausgehend von einer Einstecköffnung des inneren Mitnahmeprofils zu einem hinteren Ende des inneren Mitnahmeprofils hin annähern. Eine bevorzugte Ausgestaltung dieser Ausführungsform zeichnet sich dadurch aus, dass die Antriebsflächen des inneren Mitnahmeprofils gegenüber der Profilachse um einen Neigungswinkel $\alpha_I$ geneigt sind, der wenigstens 1°, insbesondere wenigstens 1,5° beträgt und/oder dass die Antriebsflächen des inneren Mitnahmeprofils gegenüber der Profilachse um einen Neigungswinkel $\alpha_I$ von höchstens 5°, insbesondere höchstens 3,5° und bevorzugt höchstens 3° geneigt sind, wobei der Neigungswinkel $\alpha_I$ bevorzugt 2° $\pm$ 0,2° oder 3° $\pm$ 0,2° beträgt.

In weiterer Ausgestaltung dieser Ausführungsform kann vorgesehen sein, dass die Übergangsflächen gegenüber der Profilflasche geneigt sind und sich ausgehend von einer Einstrecköffnung des inneren Mitnahmeprofils zu dem hinteren Ende des inneren Mitnahmeprofils hin der Profilachse annähern. Eine Ausgestaltung dieser Ausführungsform zeichnet sich dadurch aus, dass die Übergangsflächen gegenüber der Profilachse um einen Neigungswinkel $\beta_I$ geneigt sind, der wenigstens 1°, insbesondere wenigstens 1,5° beträgt und/oder dass die Übergangsflächen des inneren Mitnahmeprofils gegenüber der Profilachse um einen Neigungswinkel $\beta_I$ von höchstens 5°, insbesondere höchstens 3,5° und bevorzugt höchstens 3° geneigt sind, wobei der Neigungswinkel $\beta_I$ bevorzugt 2° $\pm$ 0,2° oder 3° $\pm$ 0,2° beträgt. In bevorzugter Weise ist dabei der Neigungswinkel $\alpha_I$ der Antriebsflächen gegenüber der Profilachse genau so groß wie der Neigungswinkel $\beta_i$ der Übergangsflächen gegenüber der Profilachse.

Mit anderen Worten sind die inneren Mitnahmeprofile ausgehend von deren Einstecköffnung konisch zusammenlaufend ausgebildet.

In gleicher Weise können die Antriebsflächen eines äußeren Mitnahmeprofils eines erfindungsgemäßen Antriebselements gegenüber der Profilachse geneigt sein, wobei sie sich der Profilachse zu einem Einstreckende des äußeren Mitnahmeprofils hin annähern. Zweckmäßigerweise ist hierbei vorgesehen, dass die Antriebsflächen gegenüber der Profilachse um einen Neigungswinkel $\alpha_A$ geneigt sind, welcher wenigstens 0,5°, insbesondere wenigstens 1° beträgt und/oder höchstens 1,5° beträgt, wobei der Neigungswinkel $\alpha_A$ bevorzugt 1,15° $\pm$ 0,2° beträgt.

In diesem Fall können die Übergangsflächen parallel zur Profilachse verlaufen. Gemäß einer Ausführungsform der Erfindung ist jedoch vorgesehen, dass die Übergangsflächen gegenüber der Profilachse unter einem Neigungswinkel $\beta$ a, geneigt sind, der größer als 0° und kleiner als 0,7° ist und bevorzugt 0,4° $\pm$ 0,05° beträgt.

In weiterer Ausgestaltung dieser Ausführungsform ist vorgesehen, dass der Neigungswinkel $\beta_a$, der Übergangsflächen gegenüber der Profilachse kleiner ist als der Neigungswinkel $\alpha_A$, der Antriebsflächen gegenüber der Profilachse, wobei das Verhältnis des Neigungswinkels $\alpha_A$, zu dem Neigungswinkel $\beta_A \geq 2$, insbesondere $\geq 2,5$ ist und bevorzugt 2,8 $\pm$ 0,2 beträgt.

Der Außendurchmesser Da ist gemäß einer bevorzugten Ausführungsform der Erfindung über die axiale Länge des Mitnahmeprofils konstant. Hierbei ist zu berücksichtigen, dass die Antriebsflächen bei einem konisch zusammenlaufenden Mitnahmeprofil unterschiedlich gefertigt werden können. Zum einen kann ein zylindrischer Fräser verwendet werden, der dann entsprechend des gewünschten Konuswinkels angestellt wird. In diesem Fall besitzen die Angriffsflächen die reine Kreisform in einer Ebene, die senkrecht zu dem jeweiligen Flankenwinkel des konischen Mitnahmeprofils verläuft, während die reine Kreisform in einer Schnittebene senkrecht zur Profilachse leicht elliptisch verzerrt ist. Bei anderen Herstellungsverfahren können ähnliche Verzerrungen entstehen. Solche Abweichungen sind als Fertigungstoleranzen zu betrachten.

In ähnlicher Weise kann der Innendurchmesser $D_i$ über die axiale Länge des Mitnahmeprofils konstant sein oder in Anpassung an eine Neigung der Übergangsflächen kontinuierlich bei einem inneren Mitnahmeprofil in Richtung von dessen Einstecköffnung zunehmen und im Falle eines äußeren Mitnahmeprofils ausgehend von dessen Einsteckende zunehmen. Im letzteren Fall müssen die beanspruchten Verhältnisse und damit der beanspruchte Verlauf der Normalkräfte am verjüngten Ende des äußeren Mitnahmeprofils vorliegen, bevorzugt über dessen gesamte wirksame Länge.

Wie bei Schraubenköpfen üblich weist das Mitnahmeprofil bevorzugt fünf oder sechs Antriebsflächen auf. Eine andere Anzahl ist jedoch möglich.

In bevorzugter Weise ist das Antriebselement eine Schraube und das Mitnahmeprofil an dem Schraubenkopf ausgebildet. Ebenso kann das Antriebselement ein Schraubenbit sein.

Gemäß einer bevorzugten Ausführungsform des erfindungsgemäßen Verfahrens ist vorgesehen, dass die Mitnahmeprofile der beiden Bauteile zur Profilachse geneigte Antriebsflächen aufweisen und die Mitnahmeprofile der Bauteile derart komplementär zueinander gewählt sind, dass die Antriebsflächen der Bauteile beim axialen Zusammenstecken der Mitnahmeprofile flächig in Kontakt miteinander kommen, so dass eine kraftschlüssige und/oder klemmende Verbindung, über welche die Bauteile axial miteinander verbunden werden, zwischen den Bauteilen entsteht.

Bei dem erfindungsgemäßen Verfahren werden Paare von drehfest zu verbindenden Bauteilen einander nach Art eines Kits zugeordnet, wobei die Bauteile zueinander passen und zueinander korrespondierend ausgebildet sind. Bei einer Ausgestaltung der Erfindung sind die beiden Bauteile so ausgewählt, dass die Mitnahmeprofile der beiden Bauteile zu ihrer jeweiligen Profilachse geneigte Antriebsflächen aufweisen. In bevorzugter Weise ist dabei vorgesehen, dass der Neigungswinkel $\alpha_i$, um welchen die Antriebsflächen des inneren Mitnahmeprofils gegenüber der Profilachse geneigt sind, größer ist als der Neigungswinkel $\alpha_A$, um welchen die Antriebsflächen des äußeren Mitnahmeprofils gegenüber der Profilachse geneigt sind. Dabei kann vorgesehen sein, dass der Neigungswinkel $\alpha_i$ der Antriebsflächen des inneren Mitnahmeprofils 3° $\pm$ 0,2° und der Neigungswinkel $\alpha_A$, der Antriebsflächen des äußeren Mitnahmeprofils gegenüber der Profilachse 1,15° $\pm$ 0,15° beträgt, oder dass der Neigungswinkel $\alpha_i$ der Antriebsflächen des inneren Mitnahmeprofils gegenüber der Profilachse 2° $\pm$ 0,2° beträgt und der Neigungswinkel $\alpha_A$ der Antriebsflächen des äußeren Mitnahmeprofils gegenüber der Profilachse 1,15° $\pm$ 0,15° beträgt. Durch diese Ausgestaltung wird erreicht, dass die Mitnahmeprofile an ihren verjüngten Enden in Eingriff kommen, zu den dickeren Enden hin jedoch ein geringer Spalt vorhanden ist. Es hat sich gezeigt, dass hierdurch eine sichere Verbindung auch bei quer zu den Profilachsen gerichteten Kraftbeanspruchungen gewährleistet werden kann.

In ähnlicher Weise kann vorgesehen sein, dass die Übergangsflächen der Mitnahmeprofile der beiden Bauteile zu der jeweiligen Profilachse geneigt sind, wobei der Neigungswinkel $\beta_i$ der Übergangsflächen des inneren Mitnahmeprofils gegenüber der Profilachse zu dem Neigungswinkel, um welchen die Übergangsflächen des äußeren Mitnahmeprofils gegenüber der Profilachse geneigt sind, $\geq 5$, insbesondere $\geq 6$ und bevorzugt $\geq 7,5$ ist.

Gemäß einer weiteren Ausgestaltung des erfindungsgemäßen Verfahrens kann vorgesehen sein, dass Antriebselemente verwendet werden, bei denen der Außendurchmesser des inneren Mitnahmeprofils kleiner, insbesondere um 1,5 - 3% und bevorzugt 2% kleiner als der Außendurchmesser des äußeren Mitnahmeprofils ist.

Es hat sich gezeigt, dass durch das geringe Untermaß bei dem äußeren Mitnahmeprofil Verschleißerscheinungen an den Schneidplatten bei der Herstellung der Antriebsflächen kompensiert werden können.

In weiterer Ausgestaltung dieser Ausführungsform kann vorgesehen sein, dass die Antriebsflächen der beiden Bauteile über wenigstens 25%, insbesondere wenigstens 40% und bevorzugt wenigstens 60% ihrer Erstreckung in Umfangsrichtung miteinander in flächigen Kontakt kommen.

Bevorzugt kommen die beiden Bauteile an jeder Anlagefläche jeweils beidseitig der Längsmittelebene von dieser in Anlage. Ebenso können die Mitnahmeprofile so ausgebildet sein, dass sie im Bereich der Übergangsflächen nicht in Kontakt kommen.

Weitere Merkmale und Vorteile der vorliegenden Erfindung werden anhand der beiliegenden Zeichnung. In der Zeichnung zeigt:

Figur 1 eine perspektivische Ansicht einer Schraube mit einem inneren Mitnahmeprofil,

Figur 2 eine perspektivische Ansicht eines als Schraubenbit ausgebildeten Antriebselements mit äußerem Mitnahmeprofil gemäß der Erfindung, das zu dem Mitnahmeprofil der Schraube gemäß Figur 1 korrespondiert,

Figur 3 schematisch einen Eingriff zwischen einem Schraubenbit und einer Schraube in einer Schnittdarstellung, welche den Neigungswinkel $\alpha$ der Antriebsflächen zeigt,

Figur 4 die Einzelheit X aus Figur 3 in vergrößerter Darstellung,

Figur 5 schematisch den Eingriff in einer weiteren Schnittdarstellung, welche den Neigungswinkel $\beta$ der Übergangsfläche zeigt,

Figur 6 die Einheit X aus Figur 5 in vergrößerter Darstellung,

Figur 7 eine Darstellung der Geometrie sowie die Kraftverläufe bei einem äußeren Mitnahmeprofil eines erfindungsgemäßen Antriebselements,

Figur 8 ein Beispiel für ein erfindungsgemäßes äußeres Mitnahmeprofil mit Abmessungen.

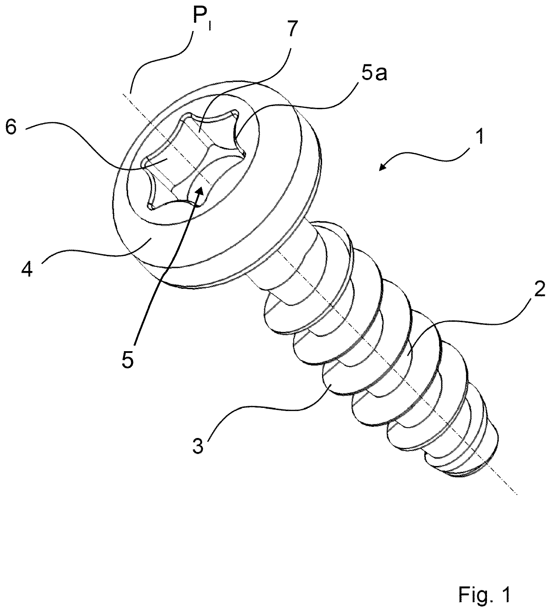

In der Figur 1 ist beispielhaft ein Antriebselement in Form einer Schraube 1 dargestellt. Die Schraube 1 umfasst einen Schaft 2, der ein Außengewinde 3 trägt und eine Längsachse der Schraube 1 definiert. An dem oberen Ende des Schafts 2 ist ein Schraubenkopf 4 vorgesehen, der an seiner Innenseite ein zur Oberseite des Schraubenkopfes 4 hin offenes, inneres Mitnahmeprofil 5 mit innenliegenden Antriebsflächen 6 aufweist, das eine koaxial zu der Längsachse der Schraube 1 liegende Profilachse $P_I$ definiert. Dabei bildet die offene Oberseite eine Einsecköffnung 5a des inneren Mitnahmeprofils 5 für einen Schraubenbit.

Das innere Mitnahmeprofil 5 besitzt im Querschnitt bzw. in der Draufsicht die Grundform eines regelmäßigen Sechskants, dessen Seitenflächen die Antriebsflächen 6 bilden, welche gegenüber der Profilachse $P_A$ bzw. der Längsachse der Schraube 1 unter einem

Neigungswinkel $\alpha_I$ von 2° geneigt sind, so dass sie sich von der Einsecköffnung 5a des inneren Mitnahmeprofils 5 zu dem hinteren Ende des inneren Mitnahmeprofils 5, hin der Profilachse $P_A$ annähern. Mit anderen Worten verjüngt sich das Mitnahmeprofil 5 im Schraubenkopf 4. Bei kleinen Schrauben kann der Neigungswinkel $\alpha_I$ auch 3° betragen.

Die Antriebsflächen 6 des inneren Mitnahmeprofils 5 sind im Querschnitt konkav, d.h. nach innen zur Profilachse $P_I$ gekrümmt ausgebildet. Konkret besitzen die konkaven Antriebsflächen 6 im Querschnitt jeweils Kreisbogensegmentform, wobei der Radius der Antriebsflächen 6 über deren gesamte axiale Länge konstant ist.

Die Antriebsflächen 6 sind an den sechs Ecken durch Übergangsbereiche bzw. Übergangsflächen 7 miteinander verbunden, die konvex gebogen sind und Kreisbogenform besitzen, wodurch sie strahlenartig nach außen ragen. Dabei erfolgt der Übergang zwischen den Übergangsflächen 7 und den Antriebsflächen 6 stetig. Die Übergangsflächen 7 sind gegenüber der Profilachse $P_I$ geneigt, wobei sie sich ausgehend von der Einsecköffnung 5a des inneren Mitnahmeprofils 5 zu dem hinteren Ende des inneren Mitnahmeprofils 5 hin der Profilachse $P_I$ annähern. Dabei ist der Neigungswinkel $\beta_I$ der Übergangsflächen 7 gegenüber der Profilachse $P_I$ genau so groß wie der Neigungswinkel $\alpha_I$ der Antriebsflächen gegenüber der Profilachse $P_I$ und beträgt somit in dem dargestellten Ausführungsbeispiel 2°.

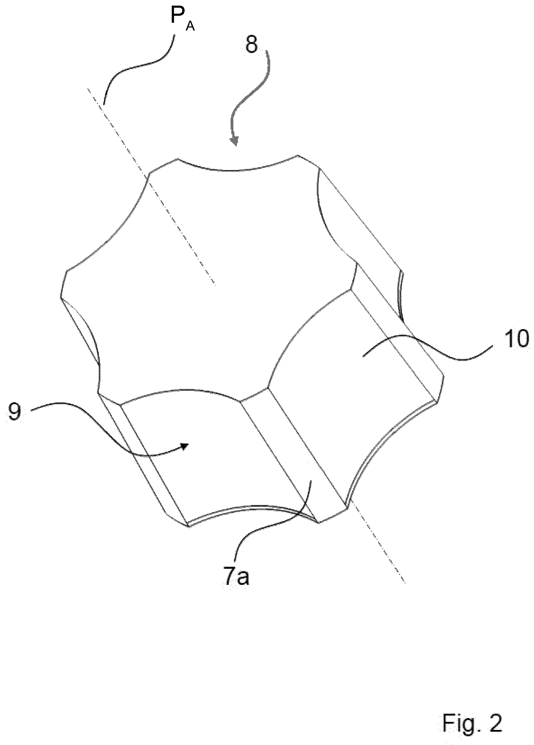

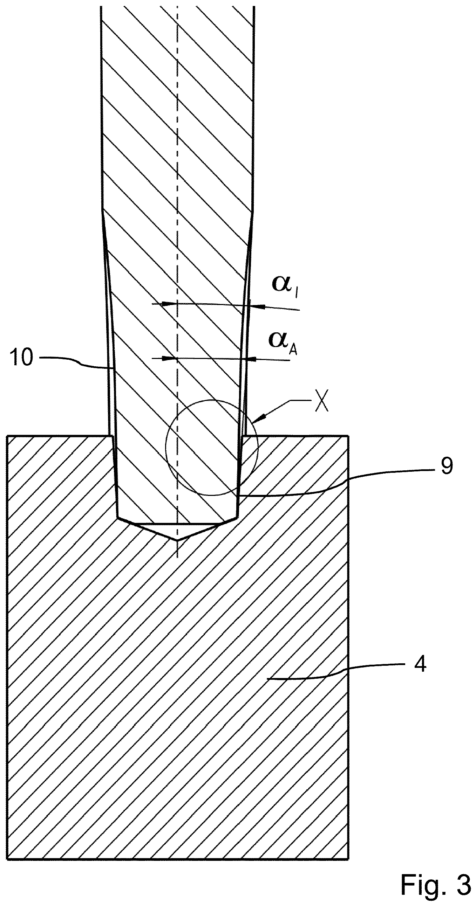

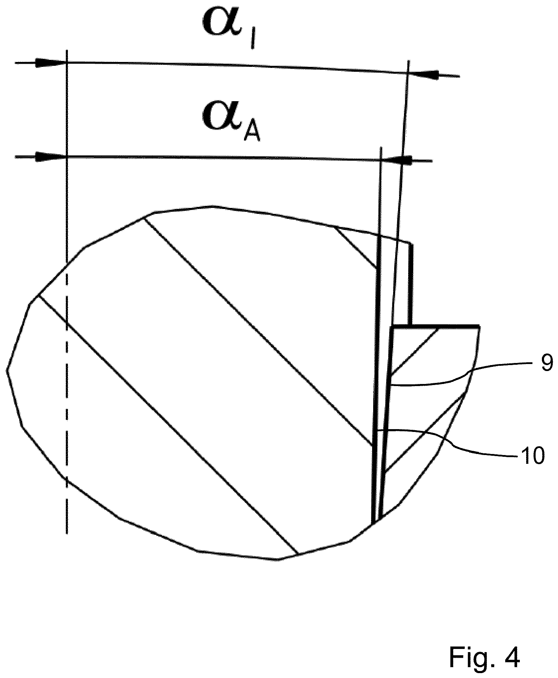

In der Figur 2 ist ein Antriebselement/Drehwerkzeug 8 in der Form eines Schraubenbits gezeigt, das zur Betätigung der in Figur 1 dargestellten Schraube 1 ausgebildet ist. Das Drehwerkzeug 8 besitzt ein äußeres Mitnahmeprofil 9, das dessen unteres Ende an einem nicht dargestellten Schaft des Schrauben Bits vorgesehen und korrespondierend zu dem Mitnahmeprofil 5 der Schraube 1 ausgebildet ist, wobei es eine Profilachse $P_A$ definiert. Entsprechend besitzt auch das äußere Mitnahmeprofil 9 im Querschnitt die Grundform des Sechskants, wobei die Antriebsflächen 10 des Mitnahmeprofils 9 konkav, d.h. in Richtung der Profilachse $P_A$ gekrümmt ausgebildet sind und geneigt zur Profilachse $P_A$ verlaufen. Konkret sind die Antriebsflächen 10 des Schraubenbits unter einem Winkel $\alpha_A$, von 1,15° gegenüber der Profilachse $P_A$ geneigt, wobei sie sich zu einem freien Einsteckende - in der Figur 2 dem oberen Ende - des äußeren Mitnahmeprofils 9, mit welchem das äußere Mitnahmeprofil 9 in das innere Mitnahmeprofil 5 einer Schraube 1 gesteckt wird, hin der Profilachse $P_A$ annähern. Die Antriebsflächen 10 des Schraubenbits verlaufen also etwas steiler als die Antriebsflächen 9 der Schraube (siehe Figuren 3 und 4).Die Antriebsflächen 10 besitzen ein kreisbogensegmentförmigen Querschnitt mit einem Radius, der über ihre axiale Länge konstant ist und den gleichen Wert besitzt wie der Krümmungsradius der Antriebsflächen 6 der Schraube 1.

Die Antriebsflächen 10 werden durch ebenfalls konisch zulaufende konvexe Übergangsbereiche bzw.

Übergangsflächen 7a stetig miteinander verbunden die kreisbogenförmig ausgebildet sind.

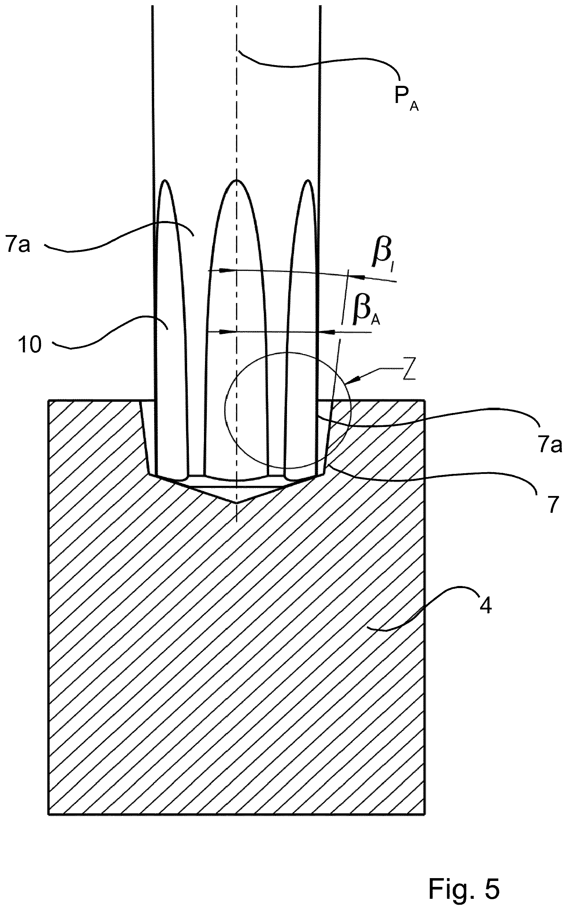

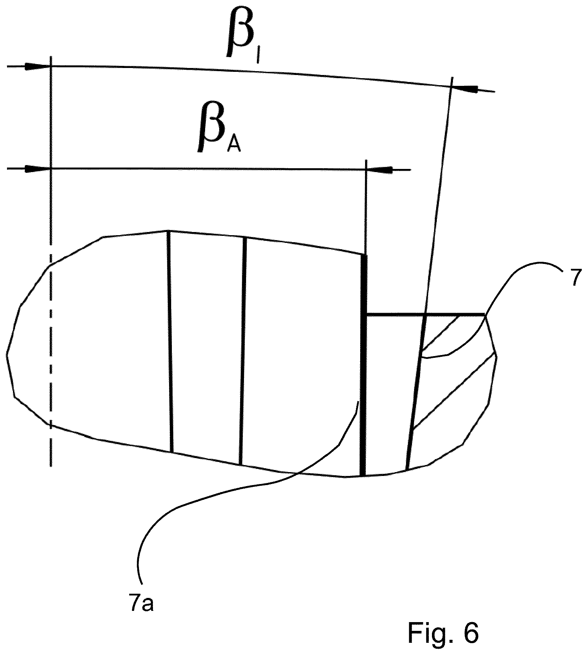

Wie bei dem inneren Mitnahmeprofil 5 sind die Übergangsflächen 7a des äußeren Mitnahmeprofils 9 gegenüber der Profilachse $P_A$ geneigt, wobei sie sich der Profilachse $P_A$ zu dem Einsteckende des äußeren Mitnahmeprofils 9 hin annähern. Dabei beträgt der Neigungswinkel βa, der Übergangsflächen 7a zu der Profilachse $P_A$ 0,4°. Damit ist der Neigungswinkel βa, der Übergangsflächen 7a gegenüber der Profilachse $P_A$ deutlich kleiner als der Neigungswinkel $α_A$, der Antriebsflächen 10 gegenüber der Profilachse $P_A$, wobei das Verhältnis Winkel der Neigungswinkel $α_A$/ βa, bei fast 3 liegt. Ferner ist der Neigungswinkel $β_A$, um welchen die Übergangsflächen 7a des äußeren Mitnahmeprofils 9 gegenüber der Profilachse P geneigt sind, deutlich kleiner als der Neigungswinkel $β_I$, um welchen die Übergangsflächen des inneren Mitnahmeprofils gegenüber der Profilachse $P_I$ geneigt sind (siehe Figuren 5 und 6). Vorliegend ist das Verhältnis $β_I$ / βa, 7,5. Die Anordnung ist so getroffen, dass die Übergangsbereiche der Schraube 1 und eines korrespondierenden Schraubenbits 8 nicht miteinander in Kontakt kommen. Entsprechend ist der Krümmungsradius der Übergangsbereiche 7a bei dem Bit 8 größer als der Krümmungsradius der Übergangsbereiche 7 bei der Schraube 1.

Mit anderen Worten ist Anordnung so getroffen, dass ein flächiger Kontakt/Eingriff zwischen den Mitnahmeprofilen 5, 9 ausschließlich im Bereich der Antriebsflächen 6, 10 stattfindet, nicht jedoch in den dazwischenliegenden Übergangsbereichen 7, 7a, und sich die Kontaktzonen in der Umfangsrichtung betrachtet jeweils beidseitig des Scheitelpunkts der konkav gekrümmten Antriebsflächen 6, 10 erstrecken. Gewünscht ist, dass zwischen den Antriebsflächen 6, 10 der beiden Bauteile 1, 8 im zusammengesteckten Zustand eine flächige Anlage besteht, so dass die beiden Bauteile 1, 8 exakt koaxial zueinander ausgerichtet werden, wenn ihre beiden Mitnahmeprofile 5, 9 axial zusammengesteckt werden, bis aufgrund der Konizität der Mitnahmeprofile 5, 9 der Antriebsflächen 6, 10 eine klemmende Verbindung zwischen den beiden Bauteilen 1, 8 hergestellt ist. Des Weiteren entsteht durch den flächigen Kontakt eine kraftschlüssige Verbindung, über welche sich hohe Drehmomente übertragen lassen.

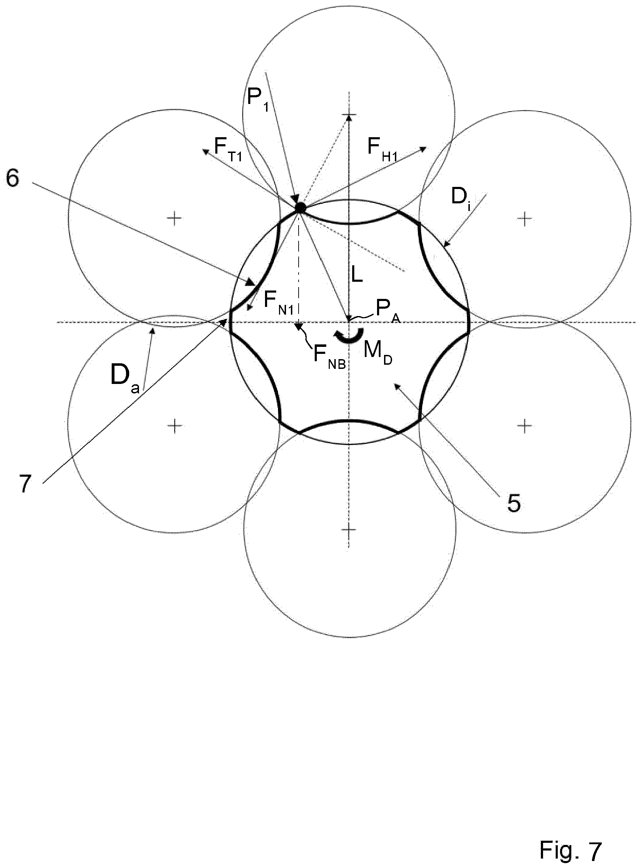

In der Figur 7 ist die erfindungsgemäße Geometrie des äußeren Mitnahmeprofils 5 des Bits 8 an dessen freiem, verjüngten Ende dargestellt.

Zu erkennen ist, dass die Übergangsflächen 7 auf einem gemeinsamen Kreis - dem Innenkreis - mit einem Innendurchmesser Da liegen. Allerdings müssen die Übergangsflächen 7 nicht durchgehend Kreisbogenform besitzen, sondern können beispielsweise auch eben ausgebildet sein. Wesentlich ist, dass die Übergangspunkte zwischen einer Antriebsfläche 6 und der danebenliegenden Übergangsfläche 7, hier einmal durch einen Pfeil P1 angedeutet, auf dem gemeinsamen Innenkreis liegen.

Ferner ist gezeigt, dass die Antriebsflächen 6 auf gleichmäßig um die Profilachse $P_A$ verteilt angeordneten Außenkreisen mit dem Durchmesser Da liegen und symmetrisch zu ihrer die Profilachse $P_A$ einschließenden Längsmittelebene ausgebildet sind.

Der Außendurchmesser $D_a$ sowie der Mittelabstand L zwischen den Mitteilpunkten des Innenkreises und der Außenkreise sind in Abhängigkeit von dem Innendurchmesser $D_i$ so gewählt, dass die Normalkraft, die an den Übergangspunkten zwischen den Antriebsflächen 6 und den danebenliegenden Übergangsflächen 7 wirkt, wenn in das Mitnahmeprofil 5 ein Drehmoment $M_D$ um die Profilachse $P_A$ eingeleitet wird, tangential an der zu der Antriebsfläche benachbarten Antriebsfläche 6 anliegt. Die Normalkraft $F_{N1}$ ist beispielhaft für den Übergangspunkt P1 zwischen der oberen Anlagefläche 6 und der links danebenliegenden Übergangsfläche 7 in der Figur 7 angedeutet.

Zu Erzeugung des gewünschten Drehmoments $M_D$ muss an dem Punkt P1 eine Hebelkraft $F_{H1}$ wirken. Diese lässt sich aufteilen in eine Normalkraft $F_{N1}$, die senkrecht zu dem Außenkreis gerichtet ist, auf dem die Antriebsfläche 6 liegt, und damit durch dessen Mittelpunkt verläuft, und eine senkrecht hierzu verlaufende Tangentialkraft $F_{T1}$. Wie in der Figur 3 gut erkennbar ist, ist die Anordnung so gewählt, dass die Normalkraft $F_{N1}$ tangential zu der links von der oberen Antriebsfläche 6 gelegenen benachbarten Antriebsfläche 6 verläuft. Erfindungsgemäß kann die Normalkraft $F_{N1}$ auch zwischen der eingezeichneten Normalkraft $F_{N1}$ und der Profilachse $P_A$ verlaufen, wie dies beispielhaft für den gestrichelten Pfeil $F_{NB}$ in der Figur 3 angedeutet ist. Wesentlich ist, dass die Normalkraft $F_{N1}$ in den zentralen Bereich des Mitnahmeprofils 9 bzw. des als Schraubenbit ausgebildeten Bauteils 8 eingeleitet wird und die strahlenförmigen Übergangsbereiche 7 zwischen den Antriebsflächen 6 nicht oder kaum auf Biegung oder Scherung beansprucht werden.

Bei gegebenen Innendurchmesser $D_i$ lassen sich der Außendurchmesser $D_a$ und der Mittenabstand L zwischen dem Mittelpunkt des Innenkreises und den Mittelpunkten der Außenkreise gemäß der nachfolgenden Formel berechnen

$$L = F(L,\, D_i)\, D_i.$$

Dabei kann das Laufverhältnis $K = D_a/D_i$ gewählt werden und sollte im Bereich von 0,3 und 2,0 liegen.

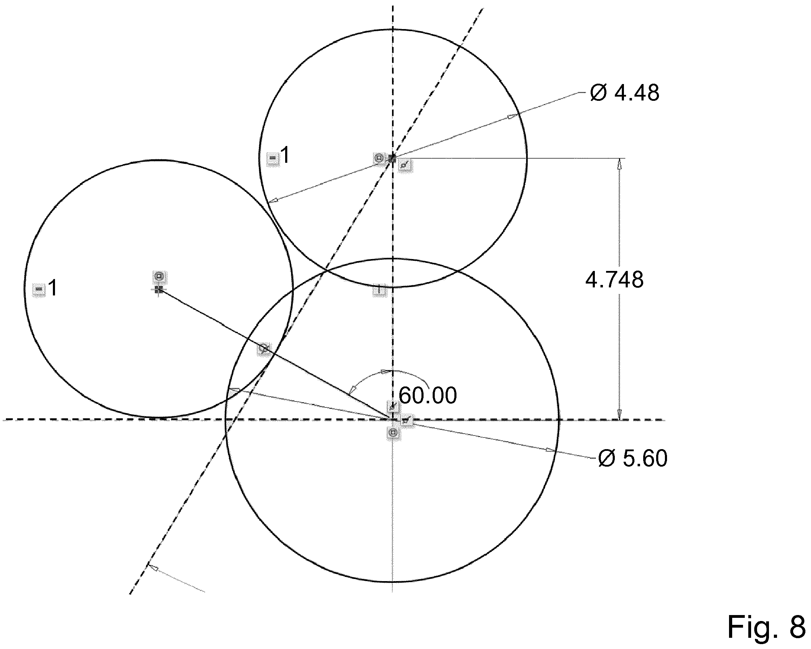

Ein Berechnungsbeispiel ist in der Figur 8 dargestellt. Die Parameter sind wie folgt ausgewählt:

- $D_i$ = 5,6 mm
- K = 0,8 (frei gewählt in dem oben genannten Bereich)
- Daraus wird Da berechnet mit $D_a = D_i$ K = 5,6 0,8 = 4,48
- mit $F(L,\, D_i)$= 0,494 e$^{(0,605K)}$=0,494

$e^{(0,605\ 0,8)}=0,8479$ kann L berechnet werden

- $L=F(L, D_i)\ D_i = 0,8479\ 5,6 = 4,748$.

Aus diesen Parametern kann die in Figur 4 dargestellte Geometrie konstruiert werden.

Die Geometrie des inneren Mitnahmeprofils 5 ist entsprechend gewählt mit der Maßgabe, dass der Außendurchmesser $D_A$ des äußeren Mitnahmeprofils etwa um 2% kleiner ist als der Durchmesser $D_A$ des hierzu passenden Innenprofils 5. Hierdurch wird dem Umstand Rechnung getragen, dass bei der Herstellung der Antriebsflächen durch Schneidplatten diese einem gewissen Verschleiß ausgesetzt sind, der im zentralen Bereich der Antriebsflächen am größten ist, weil hier das meiste Material durch die Schneidplatten entfernt werden muss. Mit zunehmendem Verschleiß wird im zentralen Bereich der Antriebsflächen weniger Material abgetragen, so dass sich hier eine minimale Wölbung bildet, die das Untermaß kompensiert.

Es wird darauf hingewiesen, dass der Neigungswinkel $\alpha$ der Antriebsflächen und die Neigungswinkel $\beta$ der Übergangsflächen jeweils in Umfangsrichtung mittig von der entsprechenden Fläche gemessen werden. Damit wird der Winkel in einer die Profilachse des jeweiligen Mitnahmeprofils schneidenden Mittelebene der entsprechenden Fläche gemessen.

Bezugszeichenliste

1 Schraube
2 Schaft
3 Außengewinde
4 Schraubenkopf
5 inneres Mitnahmeprofil
5a Einstecköffnung
6 Antriebsfläche
7 Übergangsbereiche
7a Übergangsfläche
8 Antriebselement/Drehwerkzeug/Bit
9 äußeres Mitnahmeprofil
10 Antriebsfläche
$D_a$ Außendurchmesser
L Mittenabstand
$M_D$ Drehmoment
$P_I$ Profilachse
$P_A$ Profilachse

**Patentansprüche**

1. Antriebselement (8), welches ein inneres Mitnahmeprofil (5) aufweist, das eine Profilachse ($P_I$) definiert und an seiner Innenseite mehrere gleichmäßig um die Profilachse ($P_I$) verteilt angeordnete konkave, d. h. nach innen zur Profilachse ($P_I$) gekrümmte Antriebsflächen (6) aufweist, zwischen denen ebene oder konvex gekrümmte Übergangsflächen (7) vorgesehen sind, oder welches ein äußeres Mitnahmeprofil (9) aufweist, das eine Profilachse ($P_A$) definiert und an seiner Außenseite mehrere gleichmäßig um die Profilachse ($P_A$) verteilt angeordnete konkave, d. h. nach innen zur Profilachse ($P_I$) gekrümmte Antriebsflächen (10) aufweist, zwischen denen ebene oder konvex gekrümmte Übergangsflächen (7a) vorgesehen sind, wobei

im Querschnitt die Übergangspunkte (P1) oder Übergänge zwischen den Antriebsflächen (5, 10) und den Übergangsflächen (7, 7a) auf einem gemeinsamen Innenkreis mit dem Innendurchmessers Di liegen, und die Antriebsflächen (5) auf gleichmäßig um die Profilachse ($P_I$, $P_A$) verteilt angeordneten Außenkreisen mit dem Durchmesser Da liegen und symmetrisch zu ihrer die Profilachse ($P_I$, $P_A$) einschließenden Längsmittelebene ausgebildet sind, **dadurch gekennzeichnet, dass** der Außendurchmesser Da sowie der Mittenabstand L zwischen den Mittelpunkten der Außenkreise und des Innenkreises in Abhängigkeit von dem Innendurchmesser $D_i$ so gewählt sind, dass die Normalkraft, die an den Übergangspunkten zwischen jeweils einer Antriebsfläche (6, 10) und der danebenliegenden Übergangsfläche (7, 7a) wirkt, wenn in das Mitnahmeprofil (5, 9) ein Drehmoment $M_D$ um die Profilachse ($P_I$, $P_A$) eingeleitet wird, tangential an der zu der Antriebsfläche (6, 10) benachbarten Antriebsfläche (6, 10) anliegt oder innerhalb von dieser verläuft, d. h. in den zentralen Bereich des Mitnahmeprofils (5, 9) gerichtet ist, der zwischen der benachbarten Antriebsfläche (6, 10) und der Profilachse ($P_I$, $P_A$) liegt.

2. Antriebselement nach Anspruch 1, **dadurch gekennzeichnet, dass** das Laufverhältnis $K=D_a/D_i$ im Bereich von 0,3 und 2,0 liegt und/oder dass der Mittenabstand L berechnet wird gemäß der Formel $L=F(L, D_i)\ D_i$, wobei $F(L, D_i) = 0,494\ e^{(0,605K)}$ ist.

3. Antriebselement nach einem der vorherigen Ansprüche, **dadurch gekennzeichnet, dass** es ein inneres Mitnahmeprofil (5) aufweist und die Antriebsflächen (6) des inneren Mitnahmeprofils (5) gegenüber der Profilachse ($P_a$) geneigt sind, wobei sie sich der Profilachse ($P_a$) ausgehend von einer Einstecköffnung (5a) des inneren Mitnahmeprofils (5) zu einem hinteren Ende des inneren Mitnahmeprofils (5) hin annähern.

4. Antriebselement nach Anspruch 3, **dadurch gekennzeichnet, dass** die Antriebsflächen (6) des inneren Mitnahmeprofils (5) gegenüber der Profilachse ($P_a$) um einen Neigungswinkel $\alpha_I$ geneigt sind,

der wenigstens 1°, insbesondere wenigstens 1,5° beträgt und/oder dass die Antriebsflächen (6) des inneren Mitnahmeprofils (5) gegenüber der Profilachse ($P_I$) um einen Neigungswinkel $\alpha_I$ von höchstens 5°, insbesondere höchstens 3,5° und bevorzugt höchstens 3° geneigt sind, wobei der Neigungswinkel $\alpha_I$ bevorzugt 2° ± 0,2° oder 3° ± 0,2° beträgt.

5. Antriebselement nach Anspruch 3 oder 4, **dadurch gekennzeichnet, dass** die Übergangsflächen (7) gegenüber der Profilachse ($P_I$) geneigt sind und sich ausgehend von einer Einstecköffnung (5a) des inneren Mitnahmeprofils (5) zu dem hinteren Ende des inneren Mitnahmeprofils (5) hin der Profilachse ($P_I$) annähern.

6. Antriebselement nach Anspruch 5, **dadurch gekennzeichnet, dass** die Übergangsflächen (7) gegenüber der Profilachse ($P_I$) um einen Neigungswinkel $\beta_I$ geneigt sind, der wenigstens 1°, insbesondere wenigstens 1,5° beträgt und/oder dass die Übergangsflächen (7) des inneren Mitnahmeprofils (5) gegenüber der Profilachse ($P_I$) um einen Neigungswinkel $\beta_I$ von höchstens 5°, insbesondere höchstens 3,5° und bevorzugt höchstens 3° geneigt sind, wobei der Neigungswinkel $\beta_I$ bevorzugt 2° ± 0,2° oder 3° ± 0,2°beträgt und/oder dass der Neigungswinkel $\alpha_I$ der Antriebsflächen (6) gegenüber der Profilachse ($P_I$) genauso groß ist wie der Neigungswinkel $\beta_i$ der Übergangsflächen (7) gegenüber der Profilachse ($P_I$).

7. Antriebselement nach einem der vorhergehenden Ansprüche, **dadurch gekennzeichnet, dass** es ein äußeres Mitnahmeprofil (9) aufweist und die Antriebsflächen (10) des äußeren Mitnahmeprofils (9) gegenüber der Profilachse ($P_A$) geneigt sind, wobei sie sich der Profilachse ($P_A$) zu einem Einsteckende des äußeren Mitnahmeprofils (9) hin annähern.

8. Antriebselement nach Anspruch 7, **dadurch gekennzeichnet, dass** die Antriebsflächen (10) gegenüber der Profilachse ($P_A$) um einen Neigungswinkel $\alpha_A$ geneigt sind, welcher wenigstens 0,5°, insbesondere wenigstens 1° beträgt und/oder höchstens 1,5° beträgt, wobei der Neigungswinkel $\alpha_A$, bevorzugt 1,15° ± 0,2° beträgt.

9. Antriebselement nach Anspruch 7 oder 8, **dadurch gekennzeichnet, dass** die Übergangsflächen (7a) gegenüber der Profilachse ($P_A$) unter einem Neigungswinkel $\beta a$, geneigt sind, der größer als 0° und kleiner als 0,7° ist und bevorzugt 0,4° ± 0,05° beträgt.

10. Antriebselement nach Anspruch 9, **dadurch gekennzeichnet, dass** der Neigungswinkel $\beta a$, der Übergangsflächen (7a) gegenüber der Profilachse ($P_A$) kleiner ist als der Neigungswinkel $\alpha_A$, der Antriebsflächen (10) gegenüber der Profilachse ($P_A$), wobei das Verhältnis des Neigungswinkels $\alpha_A$ zu dem Neigungswinkel $\beta_A \geq 2$, insbesondere $\geq 2,5$ ist und bevorzugt 2,8 ± 0,2 beträgt.

11. Antriebselement nach einem der vorherigen Ansprüche, **dadurch gekennzeichnet, dass** der Außendurchmesser ($D_A$) über die axiale Länge des Mitnahmeprofils (5, 9) konstant ist und/oder dass der Innendurchmesser ($D_I$) über die axiale Länge des Mitnahmeprofils (5, 9) konstant oder in Anpassung und an eine Neigung der Übergangsflächen (7, 7a) gegenüber der jeweiligen Profilachse ($P_I$, $P_A$) kontinuierlich bei einem inneren Mitnahmeprofil (5) in Richtung von dessen Einstecköffnung (5a) zunimmt und im Falle eines äußeren Mitnahmeprofils (9) ausgehend von dessen Einsteckende zunimmt und/oder dass das Mitnahmeprofil (5, 9) fünf oder sechs Antriebsflächen (6, 10) aufweist und/oder dass das Antriebselement (1) eine Schraube und das Mitnahmeprofil (5) an dem Schraubenkopf (4) ausgebildet ist und/oder dass das Antriebselement (8) ein Schraubenbit ist.

12. Verfahren zum drehfesten Verbinden zweier Bauteile, insbesondere einer Schraube (1) und eines Drehwerkzeugs (8), wobei eines der Bauteile als ein Antriebselement (8) mit einem äußeren Mitnahmeprofil (5, 9) und das andere Bauteil als Antriebselement (1) mit einem inneren Mitnahmeprofil (5) ausgebildet ist, bei dem die Mitnahmeprofile (5, 9) der beiden Bauteile (1, 8) axial zusammengesteckt werden, um eine drehfeste Verbindung zwischen den beiden Bauteilen (1, 8) herzustellen, **dadurch gekennzeichnet, dass** die Bauteile als Antriebselemente (1, 8) nach einem der vorherigen Ansprüche ausgebildet und die Mitnahmeprofile (5, 9) der Antriebselemente (1, 8) derart komplementär zueinander ausgewählt sind, dass die Antriebsflächen (6, 10) der Bauteile (1, 8) beim axialen Zusammenstecken der Mitnahmeprofile (5, 9) flächig in Kontakt miteinander kommen, so dass eine kraftschlüssige und/oder klemmende Verbindung, über welche die Bauteile (1, 8) axial miteinander verbunden werden, zwischen den Bauteilen (1, 8) entsteht.

13. Verfahren nach Anspruch 12, **dadurch gekennzeichnet, dass** die Mitnahmeprofile (5, 9) der beiden Bauteile (1, 8) zu ihrer jeweiligen Profilachse ($P_I$, $P_A$) geneigte Antriebsflächen (6, 10) aufweisen.

14. Verfahren zum drehfesten Verbinden zweier Bauteile nach Anspruch 13, **dadurch gekennzeichnet, dass** der Neigungswinkel $\alpha_i$, um welchen die Antriebsflächen (6) des inneren Mitnahmeprofils (5) gegenüber der Profilachse ($P_I$) geneigt sind, größer ist als der Neigungswinkel $\alpha_A$, um welchen die Antriebsflächen (6) des äußeren Mitnahmeprofils (10) gegenüber der Profilachse ($P_A$) geneigt sind.

**15.** Verfahren zum drehfesten Verbinden zweiter Bauteile nach Anspruch 14, **dadurch gekennzeichnet, dass** der Neigungswinkel $\alpha_i$ der Antriebsflächen (6) des inneren Mitnahmeprofils (5) 3° $\pm$ 0,2° und der Neigungswinkel $\alpha_A$, der Antriebsflächen (10) des äußeren Mitnahmeprofils (6) gegenüber der Profilachse ($P_B$) 1,15° $\pm$ 0,15° beträgt, oder dass der Neigungswinkel $\alpha_i$ der Antriebsflächen (6) des inneren Mitnahmeprofils (5) gegenüber der Profilachse ($P_I$)2° $\pm$ 0,2° beträgt und der Neigungswinkel $\alpha_A$ der Antriebsflächen (10) des äußeren Mitnahmeprofils (6) gegenüber der Profilachse ($P_A$) 1,15° $\pm$ 0,15° beträgt.

**16.** Verfahren zum drehfesten Verbinden zweier Bauteile nach einem der Ansprüche 12 bis 15, **dadurch gekennzeichnet, dass** die Übergangsflächen (7, 7a) der Mitnahmeprofile (5, 9) der beiden Bauteile (1, 8) zu der jeweiligen Profilachse ($P_I$, $P_A$) geneigt sind, wobei der Neigungswinkel $\beta_i$ der Übergangsflächen (7) des inneren Mitnahmeprofils (5) gegenüber der Profilachse ($P_I$) zu dem Neigungswinkel ($\beta_A$), um welchen die Übergangsflächen (7a) des äußeren Mitnahmeprofils (9) gegenüber der Profilachse ($P_I$) geneigt sind, $\geq$ 5, insbesondere $\geq$ 6 und bevorzugt $\geq$ 7,5 ist und/oder dass Antriebselemente (1, 8) verwendet werden, bei denen der Außendurchmesser ($D_a$) des inneren Mitnahmeprofils (5) kleiner, insbesondere um 1,5 - 3% und bevorzugt um 2% kleiner als der Außendurchmesser ($D_a$) des äußeren Mitnahmeprofils (6) ist und/oder dass die Antriebsflächen (6, 10) der beiden Bauteile über wenigstens 25%, insbesondere wenigstens 40% und bevorzugt wenigstens 60% ihrer Erstreckung in Umfangsrichtung miteinander in flächigen Kontakt kommen und/oder dass die beiden Bauteile an jeder Anlagefläche (6, 10) jeweils beidseits der Längsmittelebene von dieser in Anlage kommen und/oder dass sie im Bereich der Übergangsflächen (7, 7a) nicht in Kontakt kommen.

**Claims**

**1.** Drive element (8)

which has an inner driving profile (5) which defines a profile axis ($P_I$) and has on its inner side a plurality of concave, i.e. curved inwardly towards the profile axis ($P_I$), drive surfaces (6) arranged uniformly distributed around the profile axis ($P_I$) between which planar or convexly curved transition surfaces (7) are provided, or which has an outer driving profile (9) which defines a profile axis ($P_A$) and has on its outside a plurality of concave, i.e. curved inwardly towards the profile axis ($P_I$), drive surfaces (10) arranged distributed uniformly about the profile axis ($P_A$) between which planar or convexly curved transition surfaces (7a) are provided, wherein

in cross-section, the transition points (P1) or transitions between the drive surfaces (5, 10) and the transition surfaces (7, 7a) lie on a common inner circle with the inner diameter Di, and the drive surfaces (5) lie on outer circles of diameter Da distributed uniformly around the profile axis ($P_I$, $P_A$) and are formed symmetrically with respect to their longitudinal central plane enclosing the profile axis ($P_I$, $P_A$), **characterized in that**

the outer diameter Da and the center-to-center distance L between the centers of the outer circles and of the inner circle are selected as a function of the inner diameter $D_i$ such that the normal force acting at the transition points between in each case one drive surface (6, 10) and the adjacent transition surface (7, 7a) when a torque $M_D$ about the profile axis ($P_I$, $P_A$) is introduced into the drive profile (5, 9), is tangential to the drive surface (6, 10) adjacent to the one drive surface (6, 10) or runs within the latter, i.e. is directed into the central region of the driving profile (5, 9) which is positioned between the drive surface (6, 10) and the profile axis ($P_I$, $P_A$).

**2.** Drive element according to claim 1, **characterized in that** the running ratio K=$D_a$ /$D_i$ is in the range of 0.3 and 2.0 and/or

that the center-to-center distance L is calculated according to the formula L=F(L, $D_i$) $D_i$, where F(L, $D_i$) = 0.494 e $^{(0,605K)}$.

**3.** Drive element according to one of the previous claims, **characterized in that** it comprises an inner driving profile (5) and the drive surfaces (6) of the inner driving profile (5) are inclined with respect to the profile axis ($P_a$), approaching the profile axis ($P_a$) starting from an insertion opening (5a) of the inner driving profile (5) towards a rear end of the inner driving profile (5).

**4.** Drive element according to claim 3, **characterized in that** the drive surfaces (6) of the inner driving profile (5) are inclined relative to the profile axis ($P_a$) by an angle of inclination $\alpha_I$ which is at least 1°, in particular at least 1,5° and/or **in that** the drive surfaces (6) of the inner driving profile (5) are inclined relative to the profile axis ($P_I$) by an angle of inclination $\alpha_I$ of at most 5°, in particular at most 3.5° and preferably at most 3°, the angle of inclination $\alpha_I$ preferably being 2° $\pm$ 0.2° or 3° $\pm$ 0.2°.

5. Drive element according to claim 3 or 4, **characterized in that** the transition surfaces (7) are inclined with respect to the profile axis ($P_I$) and approach the profile axis ($P_I$) starting from an insertion opening (5a) of the inner driving profile (5) towards the rear end of the inner driving profile (5).

6. Drive element according to claim 5, **characterized in that** the transition surfaces (7) are inclined relative to the profile axis ($P_I$) by an angle of inclination $\beta_I$ which is at least 1°, in particular at least 1,5° and/or **in that** the transition surfaces (7) of the inner driving profile (5) are inclined relative to the profile axis ($P_I$) by an angle of inclination $\beta_I$ of at most 5°, in particular at most 3.5° and preferably at most 3°, the angle of inclination $\beta_I$ preferably being 2° $\pm$ 0.2° or 3° $\pm$ 0.2° and/or that the angle of inclination $\alpha_I$ of the drive surfaces (6) relative to the profile axis ($P_I$) is as large as the angle of inclination $\beta_i$ of the transition surfaces (7) relative to the profile axis ($P_I$).

7. Drive element according to one of the preceding claims, **characterized in that** it has an outer driving profile (9) and the drive surfaces (10) of the outer driving profile (9) are inclined with respect to the profile axis ($P_A$), approaching the profile axis ($P_A$) towards an insertion end of the outer driving profile (9).

8. Drive element according to claim 7, **characterized in that** the drive surfaces (10) are inclined with respect to the profile axis ($P_A$) by an angle of inclination $\alpha_A$, , which is at least 0.5°, in particular at least 1° and/or is at most 1.5°, the angle of inclination $\alpha_A$, preferably being 1.15° $\pm$ 0.2°.

9. Drive element according to claim 7 or 8, **characterized in that** the transition surfaces (7a) are inclined with respect to the profile axis ($P_{A\backslash}$) at an angle of inclination $\beta a$, which is greater than 0° and less than 0.7° and is preferably 0.4° $\pm$ 0.05°.

10. Drive element according to claim 9, **characterized in that** the angle of inclination $\beta_A$ of the transition surfaces (7a) relative to the profile axis ($P_A$) is smaller than the angle of inclination $\alpha_A$, of the drive surfaces (10) relative to the profile axis ($P_A$), the ratio of the angle of inclination $\alpha_A$, to the angle of inclination $\beta a$, being $\geq 2$, in particular $\geq 2.5$, and preferably being 2.8 $\pm$ 0.2.

11. Drive element according to one of the previous claims, **characterized in that** the outer diameter ($D_A$) is constant over the axial length of the driving profile (5, 9) and/or that the inner diameter ($D_I$) over the axial length of the driving profile (5, 9) is constant or increases continuously in adaptation to an inclination of the transition surfaces (7, 7a) with respect to the respective profile axis ($P_I$, $P_A$) in the case of an inner driving profile (5) in the direction of its insertion opening (5a) and in the case of an outer driving profile (9) starting from its insertion end and/or that the driving profile (5, 9) has five or six drive surfaces (6, 10) and/or that the drive element (1) is a screw and the driving profile (5) is formed on the screw head (4) and/or that the drive element (8) is a screw bit.

12. Method for connecting two components, in particular a screw (1) and a rotary tool (8 ), in a rotationally fixed manner, one of the components being designed as a drive element (8) with an outer driving profile (5, 9) and the other component being designed as a drive element (1) with an inner driving profile (5), in which the driving profiles (5, 9) of the two components (1, 8) are plugged together axially in order to produce a rotationally fixed connection between the two components (1, 8), **characterized in that** the components are designed as drive elements (1, 8) according to one of the previous claims and the driving profiles (5, 9) of the drive elements (1, 8) are selected to be complementary to one another in such a way that the drive surfaces (6, 10) of the components (1, 8) come into contact with one another in a 2-dimensional manner when the driving profiles (5, 9) are axially plugged together, so that a frictional and/or clamping connection, via which the components (1, 8) are axially connected to one another, is produced between the components (1, 8).

13. Method according to claim 12, **characterized in that** the driving profiles (5, 9) of the two components (1, 8) have drive surfaces (6, 10) inclined to their respective profile axis ($P_I$, $P_A$).

14. Method for the rotationally fixed connection of second components according to claim 13, **characterized in that** the angle of inclination $\alpha_i$, by which the drive surfaces (6) of the inner driving profile (5) are inclined with respect to the profile axis ($P_I$), is greater than the angle of inclination $\alpha_A$, , by which the drive surfaces (6) of the outer driving profile (10) are inclined with respect to the profile axis ($P_A$).

15. Method for the rotationally fixed connection of second components according to claim 20, **characterized in that** the angle of inclination $\alpha_i$ of the drive surfaces (6) of the inner driving profile (5) is 3° $\pm$ 0.2° and the angle of inclination $\alpha_A$, of the drive surfaces (10) of the outer driving profile (6) with respect to the profile axis ($P_B$) is 1,15° $\pm$ 0.15°, or that the angle of inclination $\alpha_i$ of the drive surfaces (6) of the inner driving profile (5) relative to the profile axis ($P_I$) is 2° $\pm$ 0.2° and the angle of inclination $\alpha_A$, of the drive surfaces (10) of the outer driving profile (6) relative to the profile axis ($P_A$) is 1.15° $\pm$ 0.15°.

16. Method for the rotationally fixed connection of two components according to one of claims 12 to 15, **characterized in that** the transition surfaces (7, 7a) of the driving profiles (5, 9) of the two components (1, 8) are inclined with respect to the respective profile axis ($P_I$, $P_A$), wherein the angle of inclination $\beta_i$ of the transition surfaces (7) of the inner driving profile (5) relative to the profile axis ($P_I$) to the angle of inclination ($P_A$) by which the transition surfaces (7a) of the outer driving profile (9) are inclined relative to the profile axis ($P_I$) is $\geq 5$, in particular $\geq 6$ and preferably $\geq 7.5$ and/or that drive elements (1, 8) are used in which the outer diameter ($D_a$) of the inner driving profile (5) is smaller, in particular by 1.5 - 3% and preferably by 2% smaller, than the outer diameter ($D_a$) of the outer driving profile (6) and/or the drive surfaces (6, 10) of the two components come into surface contact with one another over at least 25%, in particular at least 40% and preferably at least 60% of their extent in the circumferential direction and/or that the two components come into contact with each contact surface (6, 10) on both sides of the longitudinal center plane thereof and/or that they do not come into contact in the region of the transition surfaces (7, 7a).


**Revendications**

1. Elément d'entraînement (8) qui présente un profil d'entraînement intérieur (5) qui définit un axe de profil ($P_I$) et qui comporte sur sa face intérieure plusieurs profilés d'entraînement (6) concaves c'est-à-dire incurvées vers l'intérieur par rapport à l'axe du profil ($P_I$) répartis régulièrement autour de l'axe de profil ($P_I$), entre lesquelles sont prévues des surfaces de transition (7) planes ou incurvées de manière convexe, ou qui présente un profil d'entraînement extérieur (9) qui définit un axe de profil ($P_A$) et présente sur son côté extérieur plusieurs surfaces d'entraînement concaves, c'est-à-dire incurvées vers l'intérieur par rapport à l'axe du profil ($P_I$) réparties régulièrement autour de l'axe du profil ($P_A$), entre lesquelles sont prévues des surfaces de transition (7a) planes ou incurvées de manière convexe, où

> en coupe transversale, les points de transition (P1) ou les transitions entre les surfaces d'entraînement (5, 10) et les surfaces de transition (7, 7a) sont situés sur un cercle intérieur commun de diamètre intérieur Di, et
> les surfaces d'entra nement (5) se trouvent sur des cercles extérieurs de diamètre Da, répartis régulièrement autour de l'axe du profilé ($P_I$, $P_A$), et sont réalisées symétriquement par rapport à leur plan médian longitudinal entourant l'axe du profilé ($P_I$, $P_A$), **caractérisé en ce que** le diamètre extérieur Da ainsi que la distance centrale L entre les centres des cercles extérieurs et du cercle intérieur sont choisis en fonction du diamètre intérieur $D_i$ de telle sorte que la force normale qui s'exerce aux points de transition entre respectivement une surface d'entraînement (6, 10) et la surface de transition (7, 7a) située à côté, lorsqu'un couple $M_D$ est introduit dans le profilé d'entraînement (5, 9) autour de l'axe du profilé ($P_I$, $P_A$), s'applique tangentiellement à la surface d'entraînement (6, 10) voisine de la surface d'entraînement (6, 10) ou s'étend à l'intérieur de celle-ci. C'est-à-dire qu'elle est dirigée vers la zone centrale du profilé d'entraînement (5, 9), qui est située entre la surface d'entraînement (6, 10) voisine et l'axe du profilé ($P_I$, $P_A$).

2. Elément d'entraînement selon la revendication 1, **caractérisé en ce que** le rapport de marche K=D/$D_{ai}$ se situe dans la plage de 0,3 et 2,0 et/ou **en ce que** l'entraxe L est calculé selon la formule L=F(L, $D_i$) $D_i$, où F(L, $D_i$) = 0,494 $e^{(0,605K)}$.

3. Elément d'entraînement selon l'une des revendications précédentes, **caractérisé en ce qu'**il comporte un profilé d'entraînement intérieur (5) et **en ce que** les surfaces d'entraînement (6) du profilé d'entraînement intérieur (5) sont inclinées par rapport à l'axe du profilé ($P_a$), en se rapprochant de l'axe du profilé ($P_a$) à partir d'une ouverture d'insertion (5a) du profilé d'entraînement intérieur (5) vers une extrémité arrière du profilé d'entraînement intérieur (5).

4. Elément d'entraînement selon la revendication 3, **caractérisé en ce que** les surfaces d'entraînement (6) du profilé d'entraînement intérieur (5) sont inclinées par rapport à l'axe du profilé ($P_a$) d'un angle d'inclinaison $\alpha_I$ qui est d'au moins 1°, en particulier d'au moins 1,5° et/ou que les surfaces d'entraînement (6) du profilé d'entraînement intérieur (5) sont inclinées par rapport à l'axe du profilé ($P_I$) d'un angle d'inclinaison $\alpha_I$ de 5° au maximum, en particulier de 3,5° au maximum et de préférence de 3° au maximum, l'angle d'inclinaison $\alpha_I$ étant de préférence de 2° $\pm$ 0,2° ou de 3° $\pm$ 0,2°.

5. Elément d'entraînement selon la revendication 3 ou 4, **caractérisé en ce que** les surfaces de transition (7) sont inclinées par rapport à l'axe du profil ($P_I$) et se rapprochent de l'axe du profil ($P_I$) en partant d'une ouverture d'insertion (5a) du profil d'entraînement intérieur (5) vers l'extrémité arrière du profil d'entraînement intérieur (5).

6. Élément d'entraînement selon la revendication 5, **caractérisé en ce que** les surfaces de transition (7) sont inclinées par rapport à l'axe du profil ($P_I$) d'un angle d'inclinaison $\beta_I$ qui est d'au moins 1°, en particulier d'au moins 1,5° et/ou **en ce que** les surfaces de transition (7) du profil d'entraînement intérieur (5) sont inclinées par rapport à l'axe du profil ($P_I$) d'un angle d'inclinaison $\beta_I$ de 5° au maximum, en particulier au maximum 3,5° et de préférence au maximum 3°, l'angle d'inclinaison $\beta_I$ étant de préférence de 2° ± 0,2° ou de 3° ± 0,2° et/ou **en ce que** l'angle d'inclinaison $\alpha_I$ des surfaces d'entraînement (6) par rapport à l'axe du profil ($P_I$) est aussi grand que l'angle d'inclinaison $\beta_i$ des surfaces de transition (7) par rapport à l'axe du profil ($P_I$).

7. Elément d'entraînement selon l'une quelconque des revendications précédentes, **caractérisé en ce qu'**il comporte un profilé d'entraînement extérieur (9) et **en ce que** les surfaces d'entraînement (10) du profilé d'entraînement extérieur (9) sont inclinées par rapport à l'axe du profilé ($P_A$), en se rapprochant de l'axe du profilé ($P_A$) vers une extrémité d'insertion du profilé d'entraînement extérieur (9).

8. Élément d'entraînement selon la revendication 7, **caractérisé en ce que** les surfaces d'entraînement (10) sont inclinées par rapport à l'axe du profil ($P_A$) d'un angle d'inclinaison $\alpha_A$, qui est d'au moins 0,5°, en particulier d'au moins 1° et/ou d'au plus 1,5°, l'angle d'inclinaison $\alpha_A$, étant de préférence de 1,15° ± 0,2°.

9. Élément d'entraînement selon la revendication 7 ou 8, **caractérisé en ce que** les surfaces de transition (7a) sont inclinées par rapport à l'axe du profil ($P_A$) selon un angle d'inclinaison $\beta_A$ qui est supérieur à 0° et inférieur à 0,7° et de préférence égal à 0,4° ± 0,05°.

10. Élément d'entraînement selon la revendication 9, **caractérisé en ce que** l'angle d'inclinaison $\beta a$, des surfaces de transition (7a) par rapport à l'axe du profil ($P_A$) est inférieur à l'angle d'inclinaison $\alpha_A$, des surfaces d'entraînement (10) par rapport à l'axe du profil ($P_A$), le rapport de l'angle d'inclinaison $\alpha_A$, à l'angle d'inclinaison $\beta a$, étant $\geq 2$, en particulier $\geq 2,5$ et étant de préférence de 2,8 ± 0,2.

11. Élément d'entraînement selon l'une des revendications précédentes, **caractérisé en ce que** le diamètre extérieur ($D_A$) est constant sur la longueur axiale du profilé d'entraînement (5, 9) et/ou **en ce que** le diamètre intérieur ($D_I$) est constant sur la longueur axiale du profilé d'entraînement (5, 9) ou s'adapte à une inclinaison des surfaces de transition (7, 7a) par rapport à l'axe respectif du profil ($P_I$, $P_A$) augmente de manière continue dans le cas d'un profil d'entraînement intérieur (5) en direction de son ouverture d'insertion (5a) et, dans le cas d'un profil d'entraînement extérieur (9), augmente à partir de son extrémité d'insertion et/ou **en ce que** le profil d'entraînement (5, 9) présente cinq ou six surfaces d'entraînement (6, 10) et/ou **en ce que** l'élément d'entraînement (1) est une vis et le profil d'entraînement (5) est formé sur la tête de vis (4) et/ou **en ce que** l'élément d'entraînement (8) est un embout de vis.

12. Procédé de liaison solidaire en rotation de deux composants, en particulier d'une vis (1) et d'un outil rotatif (8), l'un des composants étant réalisé sous la forme d'un élément d'entraînement (8) avec un profil d'entraînement extérieur (5, 9) et l'autre composant étant réalisé sous la forme d'un élément d'entraînement (1) avec un profil d'entraînement intérieur (5), dans lequel les profils d'entraînement (5, 9) des deux composants (1,8) sont emboîtés axialement l'un dans l'autre pour réaliser une liaison solidaire en rotation entre les deux composants (1,8), **caractérisé en ce que** les profils d'entraînement (5, 9) des deux composants (1,8) sont emboîtés axialement, **en ce que** les composants sont réalisés sous forme d'éléments d'entra nement (1, 8) selon l'une des revendications précédentes et les profilés d'entra nement (5, 9) des éléments d'entra nement (1, 8) sont choisis de manière complémentaire les uns par rapport aux autres de telle sorte que les surfaces d'entra nement (6, 10) des composants (1, 8) entrent en contact à plat les unes avec les autres lors de l'embo tement axial des profilés d'entra nement (5, 9), de sorte qu'une liaison par adhérence et/ou par serrage, par laquelle les composants (1, 8) sont reliés axialement les uns aux autres, est créée entre les composants (1, 8).

13. Procédé selon la revendication 12, **caractérisé en ce que** les profilés d'entraînement (5, 9) des deux composants (1, 8) présentent des surfaces d'entraînement (6, 10) inclinées par rapport à leur axe de profilé respectif ($P_I$, $P_A$).

14. procédé pour l'assemblage solidaire en rotation de deux composants selon la revendication 13, **caractérisé en ce que** l'angle d'inclinaison $\alpha_i$, dont les surfaces d'entra nement (6) du profilé d'entra nement intérieur (5) sont inclinées par rapport à l'axe du profilé ($P_I$), est supérieur à l'angle d'inclinaison $\alpha_A$, dont les surfaces d'entra nement (6) du profilé d'entra nement extérieur (10) sont inclinées par rapport à l'axe du profilé ($P_A$).

15. Procédé d'assemblage en rotation de deux composants selon la revendication 14, **caractérisé en ce que** l'angle d'inclinaison $\alpha_i$ des surfaces d'entraîne-ment (6) du profilé d'entraînement intérieur (5) est de 3° ± 0,2° et l'angle d'inclinaison $\alpha_A$, des surfaces d'entraînement (10) du profilé d'entraînement extérieur (6) par rapport à l'axe du profilé ($P_B$) est de 1,15° ± 0,15°, ou en ce que l'angle d'inclinaison $\alpha_i$ des surfaces d'entraînement (6) du profilé d'entraînement intérieur (5) par rapport à l'axe du profilé ($P_I$)

est de 2° $\pm$ 0,2° et l'angle d'inclinaison $\alpha_A$, des surfaces d'entraînement (10) du profilé d'entraînement extérieur (6) par rapport à l'axe du profilé ($P_A$) est de 1,15° $\pm$ 0,15°.

16. Procédé d'assemblage en rotation de deux pièces selon l'une des revendications 12 à 15, **caractérisé en ce que** les surfaces de transition (7, 7a) des profilés d'entraînement (5, 9) des deux pièces (1, 8) sont inclinées par rapport à l'axe de profilé respectif ($P_I$, $P_A$), l'angle d'inclinaison $\beta_i$ des surfaces de transition (7) du profilé d'entraînement intérieur (5) par rapport à l'axe du profilé ($P_I$) par rapport à l'angle d'inclinaison ($\beta_A$) dont les surfaces de transition (7a) du profilé d'entraînement extérieur (9) sont inclinées par rapport à l'axe du profilé ($P_I$) étant $\geq 5$, en particulier $\geq 6$ et de préférence $\geq 7,5$ et/ou en ce que des éléments d'entraînement (1, 8) sont utilisés, dans lesquels le diamètre extérieur ($D_a$) du profilé d'entraînement intérieur (5) est plus petit, en particulier de 1,5 à 3% et de préférence de 2%, que le diamètre extérieur ($D_a$) du profilé d'entraînement extérieur (6) et/ou que les surfaces d'entraînement (6, 10) des deux éléments dépassent au moins 25%, en particulier au moins 40% et de préférence au moins 60% de leur extension dans la direction périphérique entrent en contact à plat l'une avec l'autre et/ou que les deux composants entrent en contact sur chaque surface d'appui (6, 10) respectivement de part et d'autre du plan médian longitudinal de celle-ci et/ou qu'ils n'entrent pas en contact dans la zone des surfaces de transition (7, 7a).

Fig. 1

Fig. 2

Fig. 3

$\alpha_I$

$\alpha_A$

9

10

Fig. 4

Fig. 5

$$\beta_l$$

$$\beta_A$$

7

7a

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005011734 A1
- WO 2013062895 A1
- US 20100269644 A1
- WO 2019238250 A1